# FASCICULE DE BREVET EUROPEEN

(11) **EP 3 878 320 B1**
(45) Date de publication et mention de la délivrance du brevet: **10.08.2022**
(21) Numéro de dépôt: 21160501.9
(22) Date de dépôt: 03.03.2021
(51) Int. Cl.: A47J 31/36, A47J 31/46, A47J 31/60

(54) **MACHINE À CAFÉ AUTOMATIQUE MUNIE D'UN DISPOSITIF DE PURGE DU CONDUIT D' ÉVACUATION DU CAFÉ**
AUTOMATISCHE KAFFEEMASCHINE, AUSGESTATTET MIT EINEM GERÄT ZUM SPÜLEN DES KAFFEE-ENTLADUNGSKANALS
AUTOMATIC COFFEE MACHINE EQUIPPED WITH A DEVICE FOR PURGING THE COFFEE DISCHARGE DUCT

(30) Priorité: 12.03.2020 FR 2002469
(43) Date de publication de la demande: 15.09.2021
(73) Titulaire: SEB S.A., 69130 Ecully (FR)
(72) Inventeur: GUEZOU, Charly, 22560 TREBEURDEN (FR); DUTERTRE, Thierry, 61000 SAINT-GERMAIN-DU-CORBEIS (FR); EVRARD, Yoann, 53950 LOUVERNE (FR)
(74) Mandataire: SEB Développement

(56) Documents cités:
- US-A1- 2011 094 541
- US-A1- 2017 238 756
- US-A1- 2020 054 163

## Description

La présente invention se rapporte au domaine technique général des machines à café automatiques comportant une chambre d'infusion raccordée à une tête de distribution par un conduit d'évacuation du café, plus particulièrement une machine à café automatique comportant un dispositif de purge du conduit d'évacuation du café.

Il est connu des documents FR2802073 ou FR2877556 une machine à café automatique comportant un circuit de commande, une tête de distribution comprenant au moins une sortie de café et un dispositif d'infusion. Le dispositif d'infusion comprend une chambre d'infusion munie d'une ouverture supérieure destinée à recevoir de la mouture de café et un piston presseur mobile entre une position haute de retrait dans laquelle il est situé au-dessus de la chambre d'infusion et une position basse de tassage dans laquelle il pénètre dans la chambre d'infusion par l'ouverture supérieure. La chambre d'infusion est alimentée en eau chaude par une pompe et elle est reliée fluidiquement à l'au moins une sortie de café par un conduit d'évacuation du café passant à travers le piston presseur.

Cependant, à la fin de la réalisation d'un café, du café infusé reste dans le conduit d'évacuation. Ce reliquat de café infusé sera distribué au début de la distribution du café suivant. Ainsi, le café qui est réalisé après un arrêt de la machine à café automatique de quelques heures, voire de quelques jours, comporte un reliquat de café qui aura vieilli et qui peut altérer le gout du café.

De plus, le phénomène peut être amplifié si le café réalisé est du type ristretto dont le volume en tasse est faible, par exemple 20 millilitres. Le reliquat de café peut représenter environ 10% du volume du café.

Il est également connu du document US 2017/238756 A1 une machine à café automatique comportant un dispositif de purge du conduit d'évacuation du café. Le but de la présente invention est de remédier aux inconvénients précités et de proposer une machine à café automatique qui garantisse un bon résultat en tasse et qui présente une mise en œuvre simple et ergonomique.

Un autre but de la présente invention est de proposer une machine à café automatique qui présente une conception simple et qui soit économique à mettre en œuvre.

Ces buts sont atteints avec une machine à café automatique selon la revendication 1.

Par conduit de mise à l'air, on comprend que le conduit de mise à l'air et un conduit de mise à l'air libre. Ainsi, lorsque l'électrovanne est dans la position d'ouverture du conduit de mise à l'air, le conduit de mise à l'air est relié à l'air libre. En d'autres termes, lorsque l'électrovanne est dans la position d'ouverture du conduit de mise à l'air, la zone de jonction est reliée à l'air ambiant présent autour de la machine à café automatique, l'air étant à la pression atmosphérique. Par une zone de jonction agencée à proximité du piston presseur, on comprend que la zone de jonction est éloignée de moins de quatre centimètres du piston presseur, de préférence de moins d'un centimètre.

Ainsi, le circuit d'évacuation est purgé uniquement par gravité. A la fin de la réalisation du café, une quantité très réduite de café subsiste dans le piston presseur, jusqu'à la zone de jonction.

De plus, lors de la réalisation d'un café, le circuit de commande synchronise l'arrêt de la pompe électrique et l'ouverture de l'électrovanne pour que le café présent dans le conduit d'évacuation continue de s'écouler en gardant sa vitesse d'écoulement. Ainsi, l'utilisateur voit le café s'écouler de manière continue. En conséquence, le circuit d'évacuation est purgé sans que l'utilisateur ne s'en aperçoive et ne soit perturbé, par exemple par une distribution du café saccadée.

Avantageusement, le conduit d'air comporte une extrémité raccordée à l'électrovanne et la zone de jonction est située à un niveau inférieur au niveau de l'extrémité raccordée à l'électrovanne, le piston presseur étant dans la position basse de tassage.

Ainsi, lors de la réalisation d'un café, le café ne peut pas remonter le conduit de mise à l'air jusqu'à l'électrovanne et ne peut donc pas nuire à son bon fonctionnement.

De préférence la différence de niveau N1 entre l'extrémité raccordée à l'électrovanne et la zone de jonction lorsque le piston presseur est dans la position basse de tassage est supérieure à cinq centimètres.

Avantageusement, le conduit de mise à l'air présente une longueur L entre la zone de jonction et l'électrovanne, la longueur L étant supérieure à dix centimètres, de préférence supérieure à vingt centimètres.

De telles dispositions permettent de garantir que le café ne remontera pas le conduit de mise à l'air jusqu'à l'électrovanne

De préférence, la tête de distribution est mobile en translation verticale entre une positon haute et une position basse et la zone de jonction est située à un niveau supérieur au niveau de l'au moins une sortie de café lorsque la tête de distribution est dans la position haute et lorsque le piston presseur est dans la position basse de tassage.

Ainsi, le circuit d'évacuation peut être purgé uniquement par gravité.

De manière avantageuse, la différence de niveau N2 entre l'au moins une sortie de café et la zone de jonction, lorsque la tête de distribution est dans la position haute et lorsque le piston presseur est dans la position basse de tassage, est supérieure ou égale à dix centimètres.

Avantageusement, la chambre d'infusion s'étend selon un axe vertical et le conduit d'évacuation comporte une portion coudée qui s'étend depuis une face supérieure du piston presseur.

De préférence, le conduit de mise à l'air comporte une portion coudée agencée au-dessus de la portion coudée du conduit d'évacuation, la portion coudée du conduit de mise à l'air étant raccordée à la portion coudée du conduit d'évacuation au niveau de la zone de jonction, à proximité de la face supérieure du piston presseur.

Un tel agencement de la portion coudée du conduit de mise à l'air au-dessus de la portion coudée du conduit d'évacuation évite au café d'atteindre l'électrovanne.

Avantageusement, la portion coudée du conduit d'évacuation et la portion coudée du conduit de mise à l'air sont agencées dans un plan vertical.

De préférence, la machine à café automatique comporte un dispositif de moussage de lait muni d'un système d'aspiration de lait et d'air à venturi à partir d'un conduit d'amenée de vapeur et le dispositif de moussage de lait comporte un conduit d'amenée d'air au système d'aspiration de lait et d'air à venturi, ledit conduit d'amenée d'air étant ouvert ou fermé par l'électrovanne qui est une électrovanne 3 voies.

Ainsi, l'électrovanne assure deux fonctions différentes : ouvrir et fermer le conduit d'amenée d'air du dispositif de moussage de lait et ouvrir et fermer le conduit de mise à l'air du conduit d'évacuation du café. On obtient donc une construction particulièrement économique.

Avantageusement, l'électrovanne comporte un orifice d'admission d'air présentant un diamètre inférieur à 0,5 millimètre.

Un tel orifice permet d'obtenir un dispositif de moussage qui réalise une mousse de lait de qualité et une mise à l'air du conduit d'évacuation pour que le café présent dans le conduit de distribution s'écoule par gravité, de manière continue.

L'invention sera mieux comprise à l'étude du mode de réalisation pris à titre nullement limitatif et illustré dans les figures annexées dans lesquelles :
[Fig. 1] La figure 1 illustre une vue en perspective d'une machine à café automatique selon un mode particulier de réalisation de l'invention.
[Fig. 2] La figure 2 illustre une vue schématique de la machine à café automatique illustrée sur la figure 1.
[Fig. 3] La figure 3 illustre une vue en perspective éclatée partielle de la machine à café automatique illustrée sur la figure 1, le dispositif d'infusion avec le piston presseur en position haute, les conduits d'évacuation et de mise à l'air et la tête de distribution étant représentés.
[Fig. 4] La figure 4 illustre une vue en coupe selon la ligne IV-IV du dispositif d'infusion avec le piston presseur en position basse de tassage de la machine à café automatique illustrée sur la figure 3.

On notera que, dans ce document, les termes «horizontal», «vertical», «inférieur», «supérieur», «longitudinal», «transversal», «haut», «bas», employés pour décrire la machine à café automatique font référence à cette machine reposant sur un plan de travail, en situation d'usage.

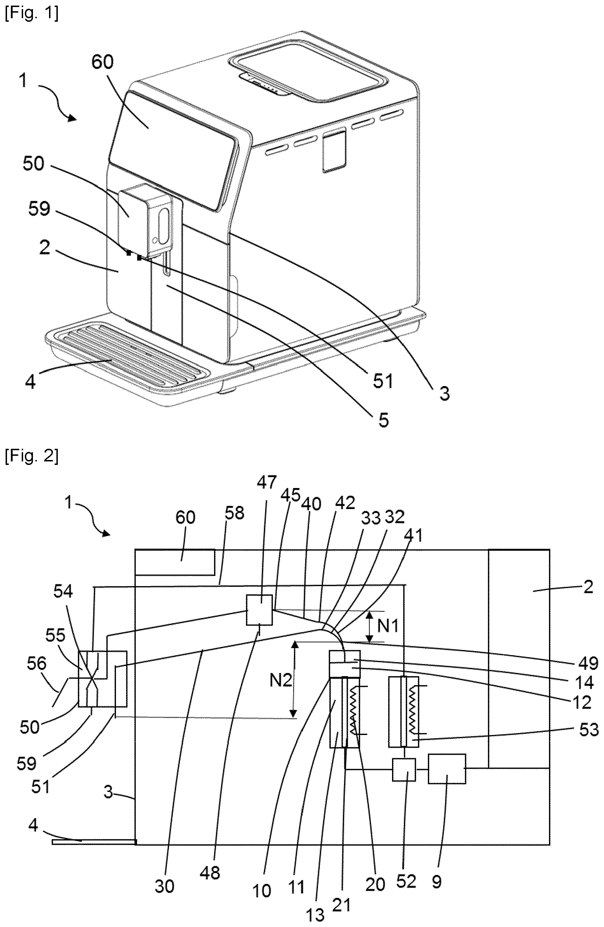

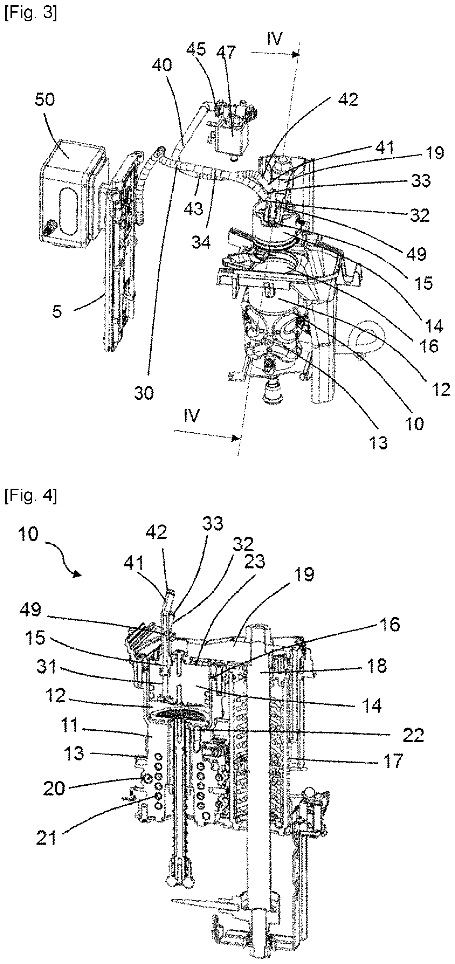

Dans l'exemple de réalisation représenté aux figures 1 à 4, une machine à café automatique 1 comporte un réservoir 2 formant une alimentation en eau froide, une pompe 9 électrique (Fig. 2) et un dispositif d'infusion 10. Le dispositif d'infusion 10 est muni d'une chambre d'infusion 12 alimentée en mouture de café par un broyeur à grains (non représenté sur les figures). La machine à café automatique 1 comporte un bâti 3, un support de récipient 4 sur lequel un récipient peut être disposé, et une tête de distribution 50 réglable en hauteur. La tête de distribution 50 comporte une sortie de café 51. Le support de récipient 4 peut par exemple comporter une grille de support et un bac récolte gouttes. La tête de distribution 50 est montée coulissante entre une positon haute dans laquelle l'utilisateur peut déposer une tasse de grande taille sur le support de récipient 4 et une position basse dans laquelle l'utilisateur peut déposer une tasse de petite taille sur le support de récipient 4. La tête de distribution 50 est montée coulissante sur une plaque support 5 attenante au bâti 3 (Fig. 3). La machine à café automatique 1 comporte un circuit de commande 60 pour gérer la réalisation d'une boisson, notamment d'un café à partir des instructions données par un utilisateur.

Tel que visible aux figures 2 à 4, la pompe 9 électrique alimente deux chaudières 13, 53 instantanées : une chaudière 13 pour produire de l'eau chaude et une chaudière 53 pour produire de la vapeur. La pompe 9 électrique comprend une entrée reliée au réservoir 2 qui est destiné à recevoir de l'eau froide. La pompe 9 électrique comporte une sortie reliée à une électrovanne 52 qui permet d'orienter l'eau vers la chaudière 13 pour produire de l'eau chaude ou vers la chaudière 53 pour produire de la vapeur. Le dispositif d'infusion 10 comprend un corps 11 qui s'étend longitudinalement selon un axe vertical. Le corps 11 comporte la chaudière 13 et renferme la chambre d'infusion 12 munie d'une ouverture supérieure 16. La chambre d'infusion 12 est susceptible de recevoir un piston presseur 14 monté déplaçable selon un axe vertical au moyen d'un mécanisme d'entraînement. La chaudière 13 est destinée à chauffer l'eau pour la préparation du café dans la chambre d'infusion 12. Le corps 11 est agencé latéralement à un vérin hydraulique 17 à simple effet comportant une tige supérieure 18 (Fig. 4) portant un bras 19 formant potence et dont l'extrémité libre est reliée au piston presseur 14, les courses du piston presseur 14 et du vérin hydraulique 17 étant ainsi effectuées selon des directions parallèles. Le piston presseur 14 parcourt une course entre une position haute de retrait pour laquelle il est situé au-dessus de la chambre d'infusion 12 et une position basse de tassage pour laquelle il pénètre dans la chambre d'infusion 12 par l'ouverture supérieure 16. Dans la position basse de tassage, le piston presseur 14 comprime la mouture de café admise dans la chambre d'infusion 12 pour former une galette de mouture comprimée.

La chaudière 13 et le corps 11 sont formés en une seule pièce de matériau conducteur de la chaleur qui contient une résistance électrique chauffante 20, un canal 21 de passage et de chauffage de l'eau (Fig. 4) dont une entrée est reliée, via la pompe 9 électrique au réservoir 2 d'eau froide et dont une extrémité 22 débouche sur le fond de la chambre d'infusion 12. Lorsque le piston presseur 14 est en position basse de tassage, la chambre d'infusion 12 est reliée fluidiquement à la sortie de café 51 par un conduit d'évacuation 30. Le conduit d'évacuation 30 comprend un conduit de passage du café 31 agencé à travers le piston presseur 14. Le conduit de passage du café 31 sort du piston presseur 14 par un orifice de sortie 15.

La pompe 9 électrique est adaptée à créer une circulation d'eau ascendante dans la chambre d'infusion 12 vers l'orifice de sortie 15 et vers la sortie de café 51. Un tel dispositif d'infusion 10 a, par exemple, été décrit plus en détails dans la demande de brevet PCT WO9912456.

Conformément aux figures 2 et 3, la machine à café automatique 1 comporte un conduit de mise à l'air 40 du conduit d'évacuation 30. Le conduit de mise à l'air 40 est raccordé au conduit d'évacuation 30 au niveau d'une zone de jonction 49 agencée à proximité du piston presseur 14. Le conduit de mise à l'air 40 comporte une électrovanne 47 qui est reliée électriquement au circuit de commande 60. L'électrovanne 47 comporte un orifice d'entrée d'air 48. Le circuit de commande 60 pilote l'électrovanne 47 pour la faire passer d'une position de fermeture du conduit de mise à l'air 40 dans laquelle l'orifice d'entrée d'air 48 est fermé à une position d'ouverture du conduit de mise à l'air 40 dans laquelle l'orifice d'entrée d'air 48 communique avec le conduit de mise à l'air 40. Le circuit de commande 60 pilote l'électrovanne 47 de manière réciproque pour la faire passer de la position d'ouverture à la position de fermeture. Le conduit de mise à l'air 40 comporte une extrémité 45 raccordée à l'électrovanne 47. La zone de jonction 49 est située à un niveau inférieur au niveau de l'extrémité 45 raccordée à l'électrovanne 47, notamment lorsque le piston presseur 14 est dans la position basse de tassage. Telle que visible à la figure 2, une différence de niveau N1 entre l'extrémité 45 raccordée à l'électrovanne 47 et la zone de jonction 49 est égale à six centimètres lorsque le piston presseur 14 est dans la position basse de tassage. La zone de jonction 49 est située à un niveau supérieur au niveau de la sortie de café 51 lorsque la tête de distribution 50 est dans la position haute et lorsque le piston presseur 14 est dans la position basse de tassage. Une différence de niveau N2 entre la sortie de café 51 et la zone de jonction 49 est égale à dix centimètres lorsque la tête de distribution 51 est dans la position haute et lorsque le piston presseur 14 est dans la position de tassage.

Le conduit d'évacuation 30 comporte une portion coudée 32 qui s'étend depuis une face supérieure 23 du piston presseur 14, à partir de l'orifice de sortie 15.

Le conduit de mise à l'air 40 comporte une portion coudée 41 agencée au-dessus de la portion coudée 32 du conduit d'évacuation 30. La portion coudée 41 du conduit de mise à l'air 40 est raccordée à la portion coudée 32 du conduit d'évacuation 30 au niveau de la zone de jonction 49, à proximité immédiate de la face supérieure 23 du piston presseur 14. Lorsque la tête de distribution 50 est dans la position haute et lorsque le piston presseur 14 est dans la position basse de tassage, à partir d'une extrémité supérieure 33 de la portion coudée 32, le conduit d'évacuation 30 prend une direction générale descendante vers la sortie de café 51 et, à partir d'une extrémité supérieure 42 de la portion coudée 41, le conduit de mise à l'air 40 prend une direction générale montante vers l'électrovanne 47. Le conduit d'évacuation 30 comporte une portion souple 34 entre l'extrémité supérieure 33 de la portion coudée 32 et la tête de distribution 50. Le conduit de mise à l'air 40 comporte une portion souple 43 entre l'extrémité supérieure 42 de la portion coudée 41 et l'électrovanne 47. Ainsi, les portions souples 34, 43 autorisent la mobilité du piston presseur 14 et de la tête de distribution 50.

Conformément à la figure 2, la machine à café automatique 1 comporte un dispositif de moussage de lait 55 agencé dans la tête de distribution 50. Le dispositif de moussage de lait 55 comporte un système d'aspiration de lait et d'air à venturi 54 à partir d'une alimentation en vapeur issue de la chaudière 53. Un tel dispositif de moussage de lait est, par exemple, décrit dans le document EP2606782. Le dispositif de moussage de lait 55 comporte un conduit d'amenée de lait 56, un conduit d'amenée d'air 57 et un conduit d'amenée de vapeur 58 au système d'aspiration. Le conduit d'amenée d'air 57 est ouvert ou fermé par l'électrovanne 47 qui est une électrovanne 3 voies. Le circuit de commande 60 pilote l'électrovanne 47 pour la faire passer d'une position de fermeture du conduit d'amenée d'air 57 dans laquelle l'orifice d'entrée d'air 48 est fermé à une position d'ouverture du conduit d'amenée d'air 57 dans laquelle l'orifice d'entrée d'air 48 communique avec le conduit de mise à l'air 40. Le circuit de commande 60 pilote l'électrovanne 47 de manière réciproque pour la faire passer de la position d'ouverture à la position de fermeture du conduit d'amenée d'air 57. Le conduit d'amenée d'air 57 est ouvert pour réaliser des boissons à base de lait moussé et le conduit d'amenée d'air 57 est fermé pour réaliser des boissons à base de lait chaud. Le dispositif de moussage de lait 55 comporte une sortie de boisson 59 à base de lait agencée à proximité de la sortie de café 51.L'orifice d'entrée d'air 48 de l'électrovanne 47 présente un diamètre égal à 0,3 millimètre.

En fonctionnement, l'utilisateur paramètre le circuit de commande 60 et lance la réalisation d'un café. Après l'introduction d'une dose de mouture dans la chambre d'infusion 12, le piston presseur 14 va prendre sa position basse de tassage et la pompe 9 électrique va être mise en marche par le circuit de commande 60 pour transférer de l'eau à travers la chaudière 13 pour la chauffer, ensuite à travers la mouture contenue dans la chambre d'infusion 12 pour produire le café et puis dans le conduit d'évacuation 30 du café formé par le conduit de passage du café 31 du piston presseur, la portion coudée 32 et la portion souple 34. Le café coule alors par la sortie de café 51 dans une tasse préalablement posée par l'utilisateur sur le support de récipient 4. Une fois que la pompe 9 a injecté la quantité d'eau correspondant à la quantité de café demandée par l'utilisateur, le circuit de commande 60 coupe l'alimentation électrique de la pompe 9 et fait passer l'électrovanne 47 de la position fermée à la position ouverte. Ainsi, de l'air est admis au niveau de la zone de jonction 49 pour que le café présent dans le conduit d'évacuation 30 continue de s'écouler en gardant sa vitesse d'écoulement. En conséquence, le conduit d'évacuation 30 du café va se vider complètement depuis la zone de jonction 49 jusqu'à la sortie de café 51.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention défini par les revendications.

Dans une variante de réalisation, le circuit de commande 60 comporte une vanne à pincement qui agit sur une portion souple du circuit de mise à l'air pour ouvrir ou fermer le conduit de mise à l'air 40.

## Revendications

1. Machine à café automatique (1) comportant un circuit de commande (60), une tête de distribution (50) comprenant au moins une sortie de café (51) et un dispositif d'infusion (10), ledit dispositif d'infusion (10) comprenant une chambre d'infusion (12) munie d'une ouverture supérieure (16) destinée à recevoir de la mouture de café et un piston presseur (14) mobile entre une position haute de retrait dans laquelle il est situé au-dessus de la chambre d'infusion (12) et une position basse de tassage dans laquelle il pénètre dans la chambre d'infusion (12) par l'ouverture supérieure (16), ladite chambre d'infusion (12) étant alimentée en eau chaude par une pompe (9) électrique et étant reliée fluidiquement à l'au moins une sortie de café (51) par un conduit d'évacuation (30) du café passant à travers le piston presseur (14), machine à café automatique dans laquelle un conduit de mise à l'air (40) libre est raccordé au conduit d'évacuation (30) au niveau d'une zone de jonction (49) agencée à proximité du piston presseur (14) et dans laquelle le conduit de mise à l'air (40) comporte une électrovanne (47), le circuit de commande (60) pilotant l'électrovanne (47) pour la faire passer d'une position de fermeture du conduit de mise à l'air (40) à une position d'ouverture du conduit de mise à l'air (40) dans laquelle la zone de jonction est reliée à l'air ambiant présent autour de la machine à café automatique, juste après avoir arrêté la pompe (9) électrique à la fin de l'infusion d'un café, pour que le café présent dans le conduit d'évacuation (30) après l'arrêt de la pompe (9) électrique s'écoule par gravité, de manière continue à la suite du café déjà distribué.

2. Machine à café automatique (1) selon la revendication 1, **caractérisée en ce que** le conduit d'air (40) comporte une extrémité (45) raccordée à l'électrovanne (47) et **en ce que** la zone de jonction (49) est située à un niveau inférieur au niveau de l'extrémité (45) raccordée à l'électrovanne (47), le piston presseur (14) étant dans la position basse de tassage.

3. Machine à café automatique (1) selon la revendication 2, **caractérisée en ce que** la différence de niveau entre l'extrémité (45) raccordée à l'électrovanne (47) et la zone de jonction (49), lorsque le piston presseur (14) est dans la position de tassage, est supérieure à cinq centimètres

4. Machine à café automatique (1) selon l'une quelconque des revendications 1 à 3, **caractérisée en ce que** le conduit de mise à l'air (40) présente une longueur L entre la zone de jonction (49) et l'électrovanne (47), la longueur L étant supérieure à dix centimètres.

5. Machine à café automatique (1) selon l'une quelconque des revendications 1 à 4, **caractérisée en ce que** la tête de distribution (50) est mobile en translation verticale entre une positon haute et une position basse et **en ce que** la zone de jonction (49) est située à un niveau supérieur au niveau de l'au moins une sortie de café (51) lorsque la tête de distribution (50) est dans la position haute et lorsque le piston presseur (14) est dans la position basse de tassage.

6. Machine à café automatique (1) selon l'une quelconque des revendications 1 à 5, **caractérisée en ce que** la chambre d'infusion (12) s'étend selon un axe vertical et **en ce que** le conduit d'évacuation (30) comporte une portion coudée (32) qui s'étend depuis une face supérieure (23) du piston presseur (14).

7. Machine à café automatique (1) selon la revendication 6, **caractérisée en ce que** le conduit de mise à l'air (40) comporte une portion coudée (41) agencée au-dessus de la portion coudée (32) du conduit d'évacuation (30), la portion coudée (41) du conduit de mise à l'air (40) étant raccordée à la portion coudée (32) du conduit d'évacuation (30) au niveau de la zone de jonction (49), à proximité de la face supérieure (23) du piston presseur (14).

8. Machine à café automatique (1) selon l'une quelconque des revendications 6 à 7, **caractérisée en ce que** la portion coudée (32) du conduit d'évacuation (30) et la portion coudée (41) du conduit de mise à l'air (40) sont agencées dans un plan vertical.

9. Machine à café automatique (1) selon l'une quelconque des revendications 1 à 8, **caractérisée en ce qu'**elle comporte un dispositif de moussage de lait (55) muni d'un système d'aspiration de lait et d'air à venturi (54) à partir d'un conduit d'amenée de vapeur (58) et **en ce que** le dispositif de moussage de lait (55) comporte un conduit d'amenée d'air (57) au système d'aspiration de lait et d'air à venturi (54), ledit conduit d'amenée d'air (57) étant ouvert ou fermé par l'électrovanne (47) qui est une électrovanne 3 voies.

10. Machine à café automatique (1) selon la revendication 9, **caractérisée en ce que** l'électrovanne (47) comporte un orifice d'entrée d'air (48) présentant un diamètre inférieur à 0,5 millimètre.

## Patentansprüche

1. Automatische Kaffeemaschine (1), umfassend eine Steuerschaltung (60), einen Ausgabekopf (50), umfassend mindestens einen Kaffeeausgang (51), und eine Infusionsvorrichtung (10), wobei die Infusionsvorrichtung (10) eine Infusionskammer (12), die mit einer oberen Öffnung (16) ausgestattet ist, die dazu vorgesehen ist, Kaffeeaufguss aufzunehmen, und einen Druckkolben (14) umfasst, der zwischen einer oberen Rückzugsposition, in der er sich oberhalb der Infusionskammer (12) befindet, und einer unteren Pressposition, in der er durch die obere Öffnung (16) in die Infusionskammer (12) eindringt, beweglich ist, wobei die Infusionskammer (12) durch eine elektrische Pumpe (9) mit Heißwasser versorgt wird und durch ein Auslassrohr (30) des Kaffees, das durch den Druckkolben (14) verläuft, mit dem mindestens einen Kaffeeausgang (51) fluidisch verbunden ist, wobei in der automatischen Kaffeemaschine ein freies Entlüftungsrohr (40) an einem Verbindungsbereich (49), der in der Nähe des Druckkolbens (14) eingerichtet ist, mit einem Auslassrohr (30) verbunden ist, und wobei das Entlüftungsrohr (40) ein Magnetventil (47) umfasst, wobei die Steuerschaltung (60) das Magnetventil (47) ansteuert, um es von einer Schließposition des Entlüftungsrohrs (40) zu einer Öffnungsposition des Entlüftungsrohrs (40) übergehen zu lassen, bei der der Verbindungsbereich mit der Umgebungsluft, die automatische Kaffeemaschine umgibt, verbunden ist, unmittelbar nachdem die elektrische Pumpe (9) am Ende der Infusion eines Kaffees angehalten wurde, damit der im Auslassrohr (30) nach dem Anhalten der elektrischen Pumpe (9) vorhandene Kaffee durch Schwerkraft auf kontinuierliche Weise im Anschluss an den bereits ausgegebenen Kaffee fließt.

2. Automatische Kaffeemaschine (1) nach Anspruch 1, **dadurch gekennzeichnet, dass** das Luftrohr (40) ein Ende (45) umfasst, das mit dem Magnetventil (47) verbunden ist, und dadurch, dass sich der Verbindungsbereich (49) auf einem niedrigeren Niveau befindet als das Niveaus des Endes (45), das mit dem Magnetventil (47) verbunden ist, wobei der Druckkolben (14) in der unteren Pressposition ist.

3. Automatische Kaffeemaschine (1) nach Anspruch 2, **dadurch gekennzeichnet, dass** der Niveauunterschied zwischen dem mit dem Magnetventil (47) verbundenen Ende (45) und dem Verbindungsbereich (49), wenn sich der Druckkolben (14) in der Pressposition befindet, größer als fünf Zentimeter ist.

4. Automatische Kaffeemaschine (1) nach einem der Ansprüche 1 bis 3, **dadurch gekennzeichnet, dass** das Entlüftungsrohr (40) eine Länge L zwischen dem Verbindungsbereich (49) und dem Magnetventil (47) aufweist, wobei die Länge L größer als zehn Zentimeter ist.

5. Automatische Kaffeemaschine (1) nach einem der Ansprüche 1 bis 4, **dadurch gekennzeichnet, dass** der Ausgabekopf (50) zwischen einer oberen Position und einer unteren Position vertikal verschiebbar ist und dadurch, dass sich der Verbindungsbereich (49) auf einem höheren Niveau befindet als das Niveau des mindestens einen Kaffeeausgangs (51), wenn der Verteilungskopf (50) in der oberen Position ist und wenn der Druckkolben (14) in der unteren Pressposition ist.

6. Automatische Kaffeemaschine (1) nach einem der Ansprüche 1 bis 5, **dadurch gekennzeichnet, dass** sich die Infusionskammer (12) entlang einer vertikalen Achse erstreckt und dadurch, dass das Auslassrohr (30) einen gekrümmten Abschnitt (32) umfasst, der sich ausgehend von einer oberen Seite (23) des Druckkolbens (14) erstreckt.

7. Automatische Kaffeemaschine (1) nach Anspruch 6, **dadurch gekennzeichnet, dass** das Entlüftungsrohr (40) einen gekrümmten Abschnitt (41) umfasst, der oberhalb des gekrümmten Abschnitts (32) des Auslassrohrs (30) eingerichtet ist, wobei der gekrümmte Abschnitt (41) des Entlüftungsrohrs (40) am Verbindungsbereich (49) in der Nähe der oberen Seite (23) des Druckkolbens (14) mit dem gekrümmten Abschnitt (32) des Auslassrohrs (30) verbunden ist.

8. Automatische Kaffeemaschine (1) nach einem der Ansprüche 6 bis 7, **dadurch gekennzeichnet, dass** der gekrümmte Abschnitt (32) des Auslassrohrs (30) und der gekrümmte Abschnitt (41) des Entlüftungsrohrs (40) in einer vertikalen Ebene eingerichtet sind.

9. Automatische Kaffeemaschine (1) nach einem der Ansprüche 1 bis 8, **dadurch gekennzeichnet, dass** sie eine Milchaufschäumungsvorrichtung (55) umfasst, die mit einem Milch- und Luftansaugsystem mit Venturi-Rohr (54) ausgehend von einem Dampfzufuhrrohr (58) ausgestattet ist und dadurch, dass die Milchaufschäumungsvorrichtung (55) ein Luftzufuhrrohr (57) zum Milch- und Luftansaugsystem mit Venturi-Rohr (54) umfasst, wobei das Luftzufuhrrohr (57) von dem Magnetventil (47), das ein 3-Wege-Magnetventil ist, geöffnet oder geschlossen wird.

10. Automatische Kaffeemaschine (1) nach Anspruch 9, **dadurch gekennzeichnet, dass** das Magnetventil (47) eine Lufteingangsöffnung (48) umfasst, die einen Durchmesser von weniger als 0,5 Millimeter aufweist.

## Claims

1. Automatic coffee machine (1) comprising a control circuit (60), a dispensing head (50) comprising at least one coffee outlet (51) and an infusion device (10), said infusion device (10) comprising an infusion chamber (12) equipped with an upper opening (16) intended to receive the coffee grounds and a pressing piston (14) movable between a high removal position wherein it is located above the infusion chamber (12) and a low compaction position wherein it penetrates into the infusion chamber (12) through the upper opening (16), said infusion chamber (12) being supplied with hot water by an electric pump (9) and being fluidly connected to the at least one coffee outlet (51) by a coffee discharge conduit (30) passing through the pressing piston (14), automatic coffee machine wherein a vent conduit (40) is connected to the discharge conduit (30) at a joining zone (49) arranged in the proximity of the pressing piston (14) and wherein the vent conduit (40) comprises a solenoid valve (47), the control circuit (60) controlling the solenoid valve (47) to make it pass from a closing position of the vent conduit (40) to an opening position of the vent conduit (40) wherein the joining zone is connected to the ambient air present around the automatic coffee machine, just after having stopped the electric pump (9) at the end of the infusion of a coffee, such that the coffee present in the discharge conduit (30) after the stopping of the electric pump (9) flows through gravity, continuously following the coffee already dispensed.

2. Automatic coffee machine (1) according to claim 1, **characterised in that** the vent conduit (40) comprises an end (45) connected to the solenoid valve (47) and **in that** the joining zone (49) is located at lower level to the level of the end (45) connected to the solenoid valve (47), the pressing piston (14) being in the low compaction position.

3. Automatic coffee machine (1) according to claim 2, **characterised in that** the difference in level between the end (45) connected to the solenoid valve (47) and the joining zone (49), when the pressing piston (14) is in the compaction position, is greater than five centimetres.

4. Automatic coffee machine (1) according to any one of claims 1 to 3, **characterised in that** the vent conduit (40) has a length L between the joining zone (49) and the solenoid valve (47), the length L being greater than ten centimetres.

5. Automatic coffee machine (1) according to any one of claims 1 to 4, **characterised in that** the dispensing head (50) is movable in vertical translation between a high position and a low position and **in that** the joining zone (49) is located at a level higher than the level of the at least one coffee outlet (51) when the dispensing head (50) is in the high position and when the pressing piston (14) is in the low compaction position.

6. Automatic coffee machine (1) according to any one of claims 1 to 5, **characterised in that** the infusion chamber (12) extends along a vertical axis and **in that** the discharge conduit (30) comprises a curved portion (32) which extends from an upper face (23) of the pressing piston (14).

7. Automatic coffee machine (1) according to claim 6, **characterised in that** the vent conduit (40) comprises a curved portion (41) arranged above the curved portion (32) of the discharge conduit (30), the curved portion (41) of the vent conduit (40) being connected to the curved portion (32) of the discharge conduit (30) at the joining zone (49), in the proximity of the upper face (23) of the pressing piston (14).

8. Automatic coffee machine (1) according to any one of claims 6 to 7, **characterised in that** the curved portion (32) of the discharge conduit (30) and the curved portion (41) of the vent conduit (40) are arranged in a vertical plane.

9. Automatic coffee machine (1) according to any one of claims 1 to 8, **characterised in that** it comprises a milk foaming device (55) equipped with a Venturi milk and air suctioning system (54) from a steam supply conduit (58) and **in that** the milk foaming device (55) comprises a conduit for supplying air (57) to the Venturi milk and air suctioning system (54), said air supply conduit (57) being opened or closed by the solenoid valve (47) which is a 3-way solenoid valve.

10. Automatic coffee machine (1) according to claim 9, **characterised in that** the solenoid valve (47) comprises an air inlet orifice (48) having a diameter of less than 0.5 millimetres.
